# EUROPÄISCHE PATENTSCHRIFT

(11) **EP 2 681 016 B1**
(45) Veröffentlichungstag und Bekanntmachung des Hinweises auf die Patenterteilung: **19.07.2017**
(21) Anmeldenummer: 12707078.7
(22) Anmeldetag: 28.02.2012
(51) Int. Cl.: B25J 17/02

(54) **PARALLELROBOTER UND STEUERUNGSVERFAHREN**
PARALLEL ROBOT AND CONTROL METHOD
ROBOT PARALLÈLE ET PROCÉDÉ DE COMMANDE

(30) Priorität: 28.02.2011 DE 102011004866
(43) Veröffentlichungstag der Anmeldung: 08.01.2014
(73) Patentinhaber: Technische Universität Dresden, 01069 Dresden (DE)
(72) Erfinder: DOERING, Michael, 01099 Dresden (DE)
(74) Vertreter: 2s | ip Schramm Schneider Patentanwälte Rechtsanwälte
(86) Internationale Anmeldenummer: PCT/EP2012/053373
(87) Internationale Veröffentlichungsnummer: WO 2012/116991

(56) Entgegenhaltungen:
- WO-A1-2004/033161
- JP-A- 2000 097 306
- US-A1- 2005 172 750
- US-A1- 2008 257 092

## Beschreibung

Die Erfindung betrifft einen Parallelroboter und ein Steuerungsverfahren für einen Parallelroboter.

In der VDI-Richtlinie 2860 sind Industrieroboter definiert als "universell einsetzbare Bewegungsautomaten mit mehreren Achsen, deren Bewegungen hinsichtlich Bewegungsfolge und Wegen bzw. Winkeln frei (d. h. ohne mechanischen Eingriff) programmierbar und gegebenenfalls sensorgeführt sind. Sie sind mit Greifern, Werkzeugen oder anderen Fertigungsmitteln ausrüstbar und können Handhabungs- und/oder Fertigungsaufgaben ausführen."

Der mechanische Aufbau eines Parallelroboters wird mit Hilfe der Kinematik beschrieben. Dabei sind die Art der Bewegung der Achsen (Freiheitsgrade, translatorisch oder rotatorisch), Anzahl und Anordnung der Achsen und der Gelenke entscheidend. Daraus ergibt sich die Form des Arbeitsraumes.

Dabei wird unterschieden in offene (oder serielle) Kinematiken und geschlossene (oder parallele) Kinematiken. Eine offene Kinematik ist dadurch gekennzeichnet, dass alle Achsen der kinematischen Kette hintereinander liegen, so wie z.B. an einem menschlichen Arm. In einer geschlossenen Kinematik hingegen sind mindestens zwei parallele kinematische Ketten an ihren Enden miteinander verbunden, beispielsweise durch einen Endeffektor. Beispiele hierfür sind Deltaroboter (drei parallele Ketten) und Hexapodroboter (sechs parallele Ketten). Robotertypen mit parallelen Kinematiken werden daher auch als Parallelroboter bezeichnet.

Bei Strukturen mit seriellen Kinematiken sind mehrere Freiheitsgrade hintereinander geschaltet, um den Endpunkt dieser offenen Kette an verschiedene Positionen im Raum bewegen zu können. Die Freiheitsgrade einer solchen Struktur sind dabei in dem Sinne abhängig voneinander, dass jeder Freiheitsgrad die Lage aller nachgeschalteten Freiheitsgrade beeinflusst. Bei parallelen Kinematiken wirken im Gegensatz dazu mehrere Antriebe parallel in einer geschlossenen Kette auf den Endpunkt der Struktur (Wirkstelle, Endeffektor, Tool Center Point TCP) ein. Bewegungen in einem Freiheitsgrad wirken sich zwar auf die Lage des Endpunktes, aber nicht auf die Lage der anderen Freiheitsgrade aus.

Bei Robotern mit serieller Kinematik ist jeder Antrieb gezwungen, neben dem Handlungsobjekt selbst zusätzlich sämtliche nachfolgenden Glieder und Gelenke zu bewegen. Mit steigender Anforderung an Dynamik und Steifigkeit stoßen derartige Roboter deshalb schnell an ihre Leistungsgrenze. Einen Ausweg bieten Parallelroboter, die sich durch geschlossene kinematische Ketten auszeichnen. Neben einer Verringerung der bewegten Massen aufgrund gestellnaher bzw. gestellfester Aktoren (Antriebseinrichtungen) und der daraus resultierenden Dynamikverbesserung zeichnen sich derartige Roboter unter anderem durch eine höhere Genauigkeit aus, da sich Winkel- und geometrische Fehler nicht addieren. Allerdings besitzen parallele im Vergleich zu seriellen Strukturen auch einige Nachteile wie beispielsweise einen geringen Arbeitsraum bezogen auf das Bauvolumen oder die Gefahr des Auftretens von Kraftsingularitäten, die den nutzbaren Arbeitsraum weiter verkleinern.

Bekannte Parallelroboter haben Antriebseinrichtungen, die die Grundstrukturen oszillierend antreiben. Einerseits sind dadurch in der Regel alle benötigten Bewegungsaufgaben innerhalb des Arbeitsraumes realisierbar, andererseits ist nur eine solche intermittierende Bewegung der Grundstrukturen möglich, weil die Grundgelenke der parallelen Grundstrukturen meist an einem Gestell fest angebracht sind, welches eine andere Betriebsweise schon mechanisch verhindert.

Bei einem reversierenden Transportvorgang (periodische Bewegung) muss ein Großteil der kinetischen Energie im System durch die Antriebseinrichtungen, d.h. die Motoren, abgebaut werden, denn es gibt keine Möglichkeit der "Energiespeicherung" in der Mechanik. Eine "Energiespeicherung" kann bei bekannten Parallelrobotern nur durch zusätzliche mechanische Elemente (z.B. Federn, Zusatzgetriebe) oder elektrische Zusatzvorrichtungen (z.B. zusätzliche Kondensatoreinheiten) durchgeführt werden, was mit zusätzlichem Aufwand verbunden ist, beispielsweise hinsichtlich Bauraum, Herstellungs- und Materialkosten usw.

Bekannte Handlingroboter mit Parallelstruktur und schwingendem Antrieb werden so betrieben, dass der Endeffektor zwischen mindestens zwei Arbeitspunkten hin und her bewegt werden; eine Aufbringung von höheren Kräften auf das Verarbeitungsgut (Produkt) ist dabei nicht vorgesehen.

US 2008 / 0257092 A1 beschreibt einen Parallelroboter umfassend eine Basis; ein bewegliches Element, an dem ein Endeffektor angebracht ist; eine Vielzahl von Drehstellgliedern, wobei diese fest an jeweiligen vorbestimmten Positionen so an der Basis angebracht sind, dass sich Achsen der Ausgangswellen der Drehstellglieder im wesentlichen radial von einer Mitte der Basis erstrecken; und einen Verbindungsmechanismus zum betriebsmäßigen Verbinden der jeweiligen Ausgangswellen der Drehstellglieder mit dem beweglichen Element, so dass eine Position und/oder eine Stellung des beweglichen Elements durch die Drehstellglieder gesteuert wird.

JP 2000 097306 A beschreibt einen Parallelroboter, der ein bewegliches Element relativ zu einer Basis bewegt, umfassend, mindestens drei Drehstellglieder, die um eine zentrale Achse der Basis angeordnet sind, wobei Ausgangswellen der Drehstellglieder vertikal oder leicht geneigt zum unteren Rand der Basis angeordnet sind; universelle Verbinder zum Verbinden der Drehstellglieder mit dem beweglichen Element; und eine Steuereinheit zum Steuern der Drehstellglieder.

WO 2004 / 033161 A1 offenbart eine Vorrichtung zum Bewegen und Ausrichten eines Objekts mit zumindest zwei Freiheitsgraden, mit einer stationären Platte, mindestens drei Drehstellgliedern, die von der stationären Platte gehalten sind, und einen drehbares bewegliches Element, das Mittel zum Aufnehmen und Loslassen eines Objekts aufweist. Die kinematische Verbindung des Drehstellglieder mit dem beweglichen Objekt umfasst starre Elemente mit einer ersten kardanischen Gelenkverbindungen und einer zweiten kardanischen Gelenkverbindung. Alle zweiten kardanischen Gelenkverbindungen sind direkt am beweglichen Element und entlang dessen Achse ausgeordnet. Diese Achse bleibt konstant parallel zu den Drehachsen der Drehstellglieder, wobei diese Drehachsen vertikal angeordnet sind.

US 2005 / 0172750 A1 beschreibt einen Industrieroboter mit einem Parallelkinematik-Manipulator zur Bewegung eines Objekts im Raum, wobei der Manipulator umfasst, eine stationäre Plattform, eine bewegliche Plattform zum Tragen des Objekts und mindestens drei Arme, welche die Plattformen miteinander verbinden. Jeder der wenigstens drei Arme weist einen ersten Armteil an der stationären Plattform auf, wobei die ersten Armteile zur endlosen Drehung um eine Achse geeignet sind. Jeder der wenigstens drei Arme weist einen zweiten Armteil auf, wobei dieser aus einer Verbindungsanordnung besteht, um den ersten Armteil mit der bewegliche Plattform zu verbinden, wobei die Verbindungsanordnung so ausgebildet ist, dass nur axiale Kräfte auf die bewegliche Plattform übertragbar sind.

Eine Aufgabe der vorliegenden Erfindung besteht darin, einen verbesserten Parallelroboter oder Roboter in gemischter serieller und paralleler Bauform sowie ein Steuerungsverfahren dafür anzugeben, bei dem die Bewegungsenergie nicht vollständig durch Abbremsen der Grundstrukturen vernichtet werden muss, sondern für den Bewegungsvorgang besser ausgenutzt werden kann. Eine weitere Aufgabe besteht darin, den Parallelroboter oder Roboter in gemischter serieller und paralleler Bauform sowie das Steuerungsverfahren auch dahingehend zu verbessern, dass während des Bewegungszyklus' auf einfache Weise höhere Nutzkräfte auf den Endeffektor und damit das Verarbeitungsgut aufgebracht werden können.

Zur Lösung dieser Aufgaben werden nachfolgend ein verbesserter Parallelroboter oder Roboter in gemischter serieller und paralleler Bauform mit den Merkmalen des Anspruchs 1 sowie ein Steuerungsverfahren mit den Merkmalen des Anspruchs 8 vorgeschlagen. Vorteilhafte Ausgestaltungen dieser Lösungen sind in den abhängigen Ansprüchen beschrieben.

Soweit nachfolgend und in den Patentansprüchen von Parallelrobotern die Rede ist, sind darunter neben Robotern, die ausschließlich parallele Strukturen aufweisen, stets auch Roboter gemeint, die neben mindestens einer parallelen Struktur auch eine oder mehrere serielle Strukturen aufweisen. Diese Formulierungsweise dient lediglich der besseren Verständlichkeit der nachfolgenden Ausführungen und der Patentansprüche; die beanspruchte Lehre umfasst hingegen neben reinen Parallelrobotern auch Roboter in gemischter serieller und paralleler Bauform.

Bei einem Parallelroboter mit mindestens einer geschlossenen kinematischen Kette, der mindestens zwei Grundstrukturen aus mindestens je einem Oberarm und je einem Unterarm umfasst, wobei die Oberarme an einem ersten Ende mittels je eines Oberarmgelenks gestellfest angeordnet sind, an einem zweiten Ende mittels je eines Unterarmgelenks mit einem ersten Ende je eines Unterarms verbunden sind und die Unterarme an ihrem zweiten Ende mittels eines oder je eines Handgelenks mit einem Endeffektor verbunden sind, wobei jeder Oberarm mit je einer Antriebseinrichtung antreibbar verbunden ist, wird vorgeschlagen, dass das Oberarmgelenk und das Unterarmgelenk mindestens einer Grundstruktur umlauffähig sind und zumindest die Antriebseinrichtung dieser Grundstruktur sowie die Gesamtgestaltung zum umlaufenden Antrieb des Oberarms ausgebildet sind.

Im Unterschied zu bekannten Parallelrobotern wird bei der vorgeschlagenen Lösung zumindest ein Teil der Grundstruktur umlaufend gestaltet. Dieses hat auch deutliche Unterschiede im konstruktiven Aufbau zur Folge. Die Lösung bietet sich vor allem bei reversierenden Bewegungen an. Bei nichtreversierenden Bewegungen ist die vorgeschlagene Lösung besonders bei mindestens einem Beschleunigungs- und Abbremsvorgang des Endeffektors (über mindestens einen Berührungspunkt der Arbeitsraumgrenze bzw. einer Streck- oder Decklagendurchfahrt einer Grundstruktur oder eines Teils einer Grundstruktur des Parallelroboters) sinnvoll.

Eigenschaften der vorgeschlagenen Lösung sind:
- "Speicherung" von Energie bei reversierenden Bewegungen durch das Ausnutzen von Endlagendurchfahrten (Streck- und Decklagen),
- Gegenüber elektrischen Energiespeichern können kleinere Motoren eingesetzt werden,
- Begrenzung des Bewegungsbereiches durch die Endlagen - im Gegensatz zur Verwendung von schwenkenden Antrieben ist der Arbeitsraum kleiner und bei entscheidenden Größenänderungen der Abtriebsbewegung sind mechanische Änderungen nötig (Einstellbarkeit bzw. Austauschbarkeit der Oberarme),
- Durch die Endlagen ist der Arbeitsraum kleiner, kann aber im Gegensatz zu schwenkenden Antrieben für anspruchsvolle reversierende Bewegungen fast vollständig genutzt werden (die Bewegung in Randbereichen des Arbeitsraumes kann aber u.U. auch ungünstiger sein gegenüber schwenkend angetrieben Robotern),
- Unabhängigkeit von der Taktzahl bei der Energiespeicherung (im Gegensatz zur Verwendung von z.B. Federn),
- Keine zusätzlichen Elemente nötig (vgl. Zusatzgetriebe zur Energiespeicherung),
- Im Zusammenhang mit der Energiespeicherung ist im Verhältnis eine höhere Taktgeschwindigkeit möglich (bei geeigneter reversierender Bewegung),
- Die Vielfalt an Bewegungsbahnen wird eingeschränkt, da die Bewegungsbahnen mindestens einen Berührungspunkt mit der Arbeitsraumbegrenzung haben müssen. Bei Anwendung von Bewegungsbahnen im Inneren der Begrenzung kann kein Konfigurationswechsel erfolgen, womit auch die "energetischen" Vorteile nicht genutzt werden können.

Die Erfindung zeichnet sich weiterhin dadurch aus, dass die Antriebseinrichtungen mit einer Steuerungseinrichtung wirkverbunden sind, welche die Antriebseinrichtung der mindestens einen Grundstruktur so ansteuert, dass der Endeffektor eine periodische Bewegung zwischen mindestens zwei Arbeitspunkten innerhalb eines Arbeitsraums dadurch ausführt, dass der Oberarm der mindestens einen Grundstruktur fortwährend umlaufende Bewegungen ausführt, wobei die Bewegungsbahn des Endeffektors während einer Bewegungsperiode mindestens einmal die Begrenzung des Arbeitsraums berührt.

Der Arbeitsraum liegt dabei innerhalb eines durch die Oberarmgelenke begrenzten Halbraums, d.h. vollständig auf einer Seite der durch gedachte Verbindungslinien der Oberarmgelenke gebildeten Begrenzung.

Für viele praktische Aufgaben ist es notwendig, dass der Endeffektor während des Bewegungsvorgangs parallel gehalten wird. Neben der umlauffähigen Gestaltung der Oberarme müssen daher zusätzliche Glieder vorhanden sein, um das Arbeitsorgan (Endeffektor) waagerecht oder in konstantem Winkel zum Umgebung zu halten. Dieses ist begründet durch die Anzahl an Freiheitsgraden, die im ebenen Fall drei beträgt und bei der Verwendung von zwei Antrieben somit ein Freiheitsgrad offen bleibt. Die Anwendung umlauffähiger Antriebe erfordert z.B. für den Fall einer ebenen Bewegung mit einem 2-RRR Deltaroboter, dass auch die so entstehenden Getriebestrukturen umlauffähig sind.

Hierfür ist gemäß einer weiteren Ausgestaltung vorgesehen, dass mindestens eine der Grundstrukturen eine Parallelstruktur aufweist, die an einem ersten Ende gestellfest angeordnet ist und an einem zweiten Ende mit dem Endeffektor so verbunden ist, dass der Endeffektor bei der periodischen Bewegung mit konstanter räumlicher Ausrichtung gehalten wird.

Dabei kann gemäß einer ersten Weiterbildung die Parallelstruktur identisch zu mindestens einer ersten Grundstruktur aufgebaut und parallel zu dieser ersten Grundstruktur angeordnet sein, wobei die Oberarmgelenke, Unterarmgelenke und Handgelenke der ersten Grundstruktur und der Parallelstruktur mit jeweils gleichem Abstand zueinander angeordnet sind. Die Parallelstruktur kann dabei identisch zu der ersten Grundstruktur aufgebaut sein.

Die Bedeutung der hier verwendeten Begriffe Oberarmgelenk, Unterarmgelenk und Handgelenk wird nachfolgend im Zusammenhang mit Ausführungsbeispielen und Zeichnungen noch näher erläutert.

Dabei kann weiter vorgesehen sein, dass die Parallelstruktur durch eine eigene Antriebseinrichtung synchron zur ersten Grundstruktur antreibbar ist, oder dass die Parallelstruktur mittels einer Kraftübertragungseinrichtung durch die Antriebseinrichtung der ersten Grundstruktur synchron zur ersten Grundstruktur antreibbar ist. Eine solche Kraftübertragungseinrichtung kann beispielsweise ein Riemenantrieb, ein Zahnradgetriebe oder ähnliches sein, welches die Bewegung von der Antriebseinrichtung der ersten Grundstruktur auf die Parallelstruktur überträgt.

Gemäß einer zweiten Weiterbildung kann die Parallelstruktur zwei mit einem festen ersten Abstand parallel zueinander angeordnete Kurbelglieder umfassen, deren jeweiliges erstes Ende umlauffähig gestellfest angebracht ist und deren jeweiliges zweites Ende umlauffähig mit einem Abstand voneinander, der gleich groß ist wie der erste Abstand, mit dem Unterarmgelenk der ersten Grundstruktur verbunden ist, und weiterhin ein parallel zum Unterarm der ersten Grundstruktur angeordnetes Koppelglied umfassen, dessen erstes Ende gelenkig mit einem zweiten Abstand vom Unterarmgelenk der ersten Grundstruktur mit dem Unterarmgelenk der ersten Grundstruktur verbunden ist, und dessen zweites Ende gelenkig mit einem Abstand zum Handgelenk, der gleich groß ist wie der zweite Abstand, mit dem Endeffektor verbunden ist.

Weiterhin wird ein Steuerungsverfahren für einen Parallelroboter der beschriebenen Art vorgeschlagen, bei dem der Oberarm mindestens einer Grundstruktur zu einer fortwährend umlaufenden Bewegung angetrieben wird, wobei der Endeffektor eine periodische Bewegung zwischen mindestens zwei Arbeitspunkten innerhalb eines Arbeitsraums ausführt, und wobei die Bewegungsbahn des Endeffektors während einer Bewegungsperiode mindestens einmal die Begrenzung des Arbeitsraums berührt.

Gemäß einer Ausgestaltung des Verfahrens werden die mindestens zwei Antriebseinrichtungen unabhängig voneinander durch eine programmierbare Steuerungseinrichtung angesteuert.

In einer Weiterbildung des Steuerungsverfahrens ist vorgesehen, dass die mindestens eine Grundstruktur an mindestens einer Stelle der periodischen Bewegung des Endeffektors so angesteuert wird, dass eine Streck- oder Decklage zwischen Oberarm und Unterarm erzeugt und dabei eine höhere Nutzkraft auf den Endeffektor ausgeübt wird.

Diese Verfahrensvariante ermöglicht die Nutzbarmachung von Roboterlösungen mit Parallelstruktur für die Aufbringung hoher Kräfte. Genutzt werden soll dabei die Tatsache, dass der vorgeschlagene Parallelroboter mindestens eine Grundstruktur mit umlaufenden Antrieben aufweist, die es durch die Ausnutzung von Streck- und Decklagen ermöglicht, hohe Kräfte auf den Endeffektor und damit das Verarbeitungsgut aufzubringen.

Der Bedarf wird vor allem in Prozessen gesehen, bei denen eine direkte Verknüpfung von Umformung (bzw. allg. Aufgaben mit hoher Kraftaufbringung) und Handhabung nötig oder günstig ist.

Die hohen gewünschten Prozesskräfte wirken nicht direkt auf den Motor, daher sind geringere Motorengrößen möglich, weil das mechanische Übersetzungsverhältnis ausgenutzt werden kann. Durch die Kombination von Handlingaufgaben und Aufgaben mit hoher Kraftaufbringung können Arbeitsorgane und demzufolge auch Antriebe eingespart werden.

Mit dem beschriebenen Verfahren können Parallelroboter mit mindestens einer umlauffähigen Grundstruktur für eine periodische Bewegungsaufgabe genutzt werden, wobei die bei umlaufenden Antrieben auftretenden Streck- und Decklagen bewusst für die Aufbringung hoher Kräfte auf das Verarbeitungsgut verwendet werden. Dieses Prinzip ist auf Parallelroboter mit der Grundstruktur RRR (R = Drehgelenk) unabhängig von der Anzahl der Grundstrukturen (und damit auch der Antriebe) anwendbar.

Nachfolgend wird die Erfindung anhand von Ausführungsbeispielen und zugehörigen Zeichnungen näher erläutert. Dabei zeigen
Fig. 1 einen zweidimensionalen Parallelroboter,
Fig. 2 den Vergleich der herkömmlichen Arbeitsweise eines Parallelroboters mit der erfindungsgemäßen Arbeitsweise,
Fig. 3 Beispiele für nicht umlauffähige und umlauffähige Gestaltungen eines Oberarmgelenks,
Fig. 4 Beispiele für Bewegungsabläufe des vorgeschlagenen Parallelroboters,
Fig. 5 einen Überblick über prinzipielle Gestaltungsmöglichkeiten für die Gestaltung der Parallelogrammstruktur des vorgeschlagenen Parallelroboters,
Fig. 6 ein Ausführungsbeispiel für einen umlaufenden/ umlauffähigen zweidimensionalen Parallelroboter, und
Fig. 7 ein Ausführungsbeispiel für einen umlaufenden/ umlauffähigen dreidimensionalen Parallelroboter.

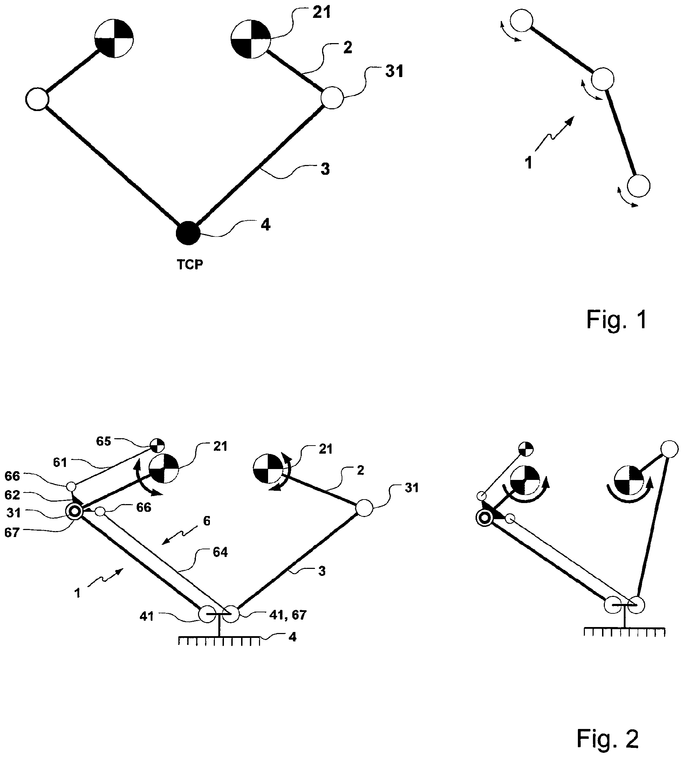

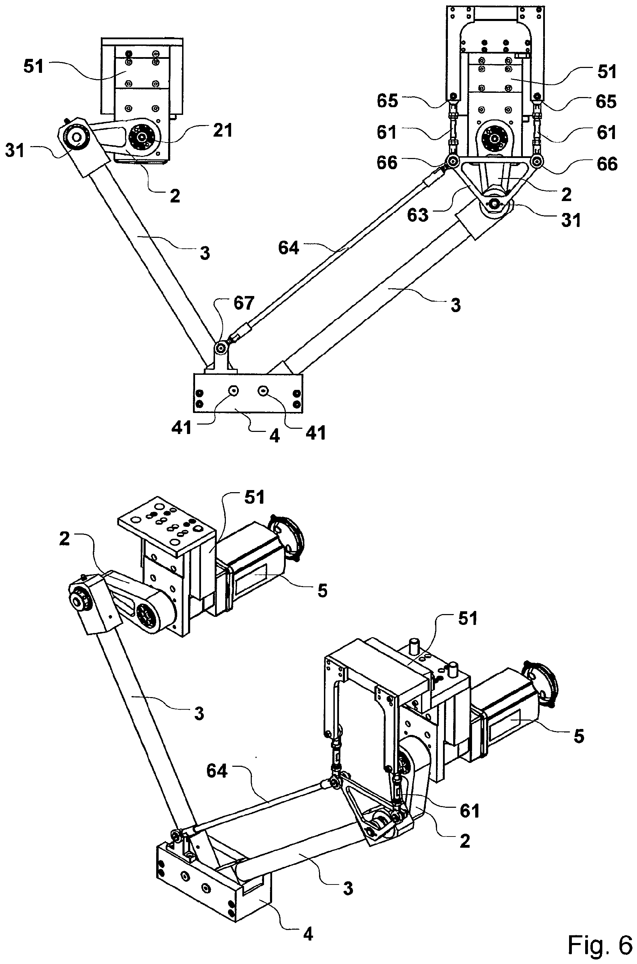

Fig. 1 zeigt in der linken Darstellung den prinzipiellen Aufbau eines zweidimensionalen Parallelroboters, bei dem zwei parallele RRR-Grundstrukturen 1, d.h. Strukturen mit drei rotativen Gelenken, die eine geschlossene Kette bilden und gemeinsam auf einen Endeffektor wirken. Jede dieser Grundstrukturen 1 weist ein gestellfestes Oberarmgelenk 21 auf, das ein erstes Ende eines Oberarms 2 mit einem Maschinengestell verbindet. Am zweiten Ende des Oberarms 2 ist dieser durch ein Unterarmgelenk 31 mit dem ersten Ende eines Unterarms 3 gelenkig verbunden. Beide Grundstrukturen 1 sind miteinander und mit einem (nicht dargestellten) Endeffektor durch ein gemeinsames Handgelenk (das entsprechend der konstruktiven Ausführung auch in mehr als ein Gelenk zerfallen kann - vgl. Fig. 6) 41 gelenkig verbunden. Jede der beiden Grundstrukturen 1 für sich betrachtet ist wie in der rechten Darstellung gezeigt aufgebaut.

Fig. 2 zeigt in der linken Darstellung den prinzipiellen Aufbau eines bekannten Deltaroboters mit einer 2-RRR-Struktur und schwingendem Antrieb der beiden Grundstrukturen 1, und in der rechten Darstellung den hier beschriebenen Deltaroboter mit einer 2-RRR-Struktur und umlaufendem Antrieb der beiden Grundstrukturen 1 (Parallelstruktur hier dargestellt nur bedingt umlauffähig).

Beide Grundstrukturen 1 jedes der beiden dargestellten Roboter haben ein eigenes Handgelenk 41, das den jeweiligen Unterarm 3 mit dem Endeffektor 4 verbindet.

Die jeweils links angeordnete Grundstruktur 1 beider Roboter weist eine Parallelstruktur 6 auf, die dafür sorgt, dass der Endeffektor 4 keinen Drehfreiheitsgrad aufweist. Die Parallelstruktur 6 umfasst jeweils ein Kurbelglied 61, ein Koppelglied 64 und einen Dreiecksarm 62 (d.h. Glied mit drei Gelenken, Ausführungen können unterschiedlich sein). Das Kurbelglied 61 ist durch ein gestellfestes erstes Gelenk 65 an der Maschine angebracht und durch ein zweites Gelenk 66 mit dem Dreiecksarm 62 verbunden, der seinerseits durch ein drittes Gelenk 67 gelenkig mit dem Unterarmgelenk 31 der Grundstruktur 1 verbunden ist. Ebenfalls durch ein zweites Gelenk 66 ist das Koppelglied 64 mit dem Dreiecksarm 62 verbunden. An seinem zweiten Ende ist das Koppelglied 64 gelenkig mit dem Endeffektor 4 verbunden, und zwar an derselben Stelle wie das Handgelenk 41 der anderen, rechts angeordneten Grundstruktur 1. Diese Ausführung ist vorteilhaft, aber nicht zwingend und die Verbindung des Koppelgliedes 64 kann auch an beliebiger Stelle am Endeffektor 4 erfolgen.

Der entscheidende Unterschied hinsichtlich des Betriebs beider Roboter besteht in dem umlaufenden Antrieb der Oberarme 2 bei dem rechts dargestellten Roboter gegenüber dem schwingenden Antrieb der Oberarme 2 bei dem links dargestellten Roboter, und hinsichtlich der konstruktiven Ausführung in der Gestaltung der Oberarmgelenke 21 sowie der Parallelstruktur 6, die letztlich den umlaufenden Betrieb überhaupt erst ermöglichen.

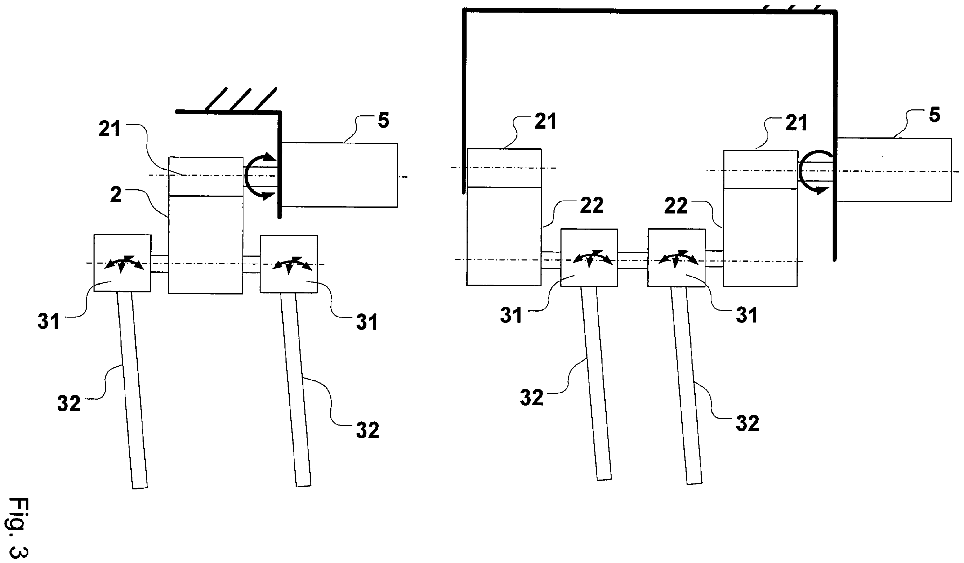

Fig. 3 zeigt in der linken Darstellung eine nicht umlauffähige Ausführung eines Oberarmgelenks 21. Eine Antriebseinrichtung 5 treibt über das Oberarmgelenk 21 den Oberarm 2 an, der über das Unterarmgelenk 31 mit dem Unterarm 3 verbunden ist. Dieser Unterarm 3 besteht aus zwei parallelen Unterarmelementen 32, die auch senkrecht zur Bewegungsebene des Oberarms 2 schwenkbar sind. Dies ist insbesondere bei dreidimensional arbeitenden Parallelrobotern notwendig und Stand der Technik, damit die Drehfreiheitsgrade resultierend aus dem Aufbau der Grundstruktur bzgl. des Endeffektors 4 gesperrt werden können.

Wie leicht zu erkennen ist, ist diese Gestaltung nicht umlauffähig, weil das rechte der beiden Unterarmelemente 32 mit der Antriebseinrichtung 5 kollidieren würde, wenn der Oberarm 2 durch den oberen Teil seiner Umlaufbahn bewegt würde.

In der rechten Darstellung hingegen ist die Umlauffähigkeit dadurch gesichert, dass beide Unterarmelemente 32 an der der Antriebseinrichtung gegenüberliegenden Seite eines Oberarmelements 22 angeordnet sind. Im hier dargestellten Ausführungsbeispiel ist dies dadurch realisiert, dass auch der Oberarm 2 aus zwei Oberarmelementen 22 besteht (die auch im Gelenk 31 verbunden sein können), welche durch je ein gestellfestes Oberarmgelenk 21 gehalten sind. Zwischen diesen beiden Oberarmelementen 22 sind die beiden Unterarmelemente 32 angeordnet. Die Antriebseinrichtung 5 hingegen ist jenseits der Oberarmelemente 22 angeordnet. Diese Ausführung ist auch als einseitige Variante denkbar.

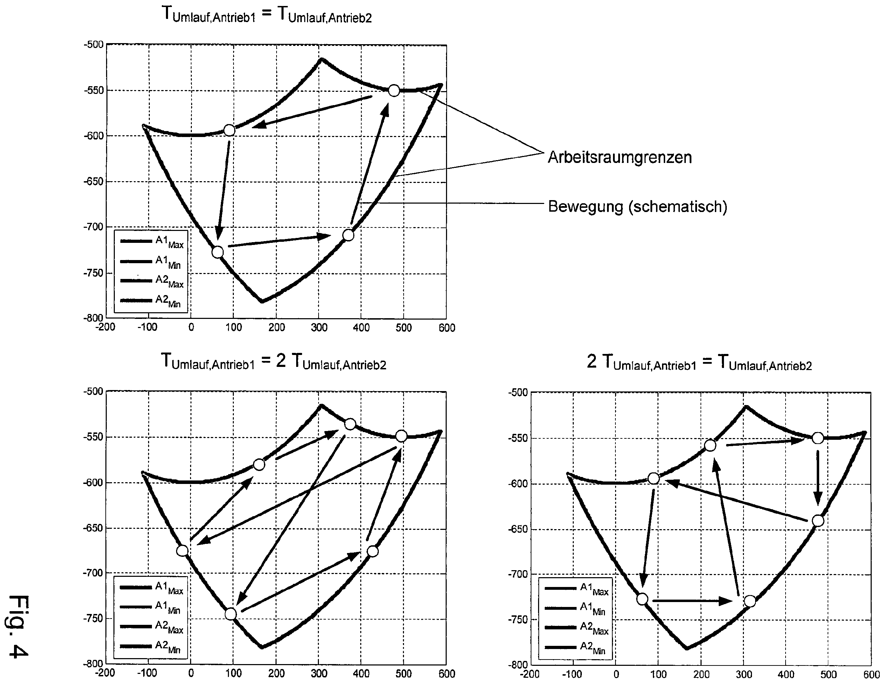

Fig. 4 zeigt beispielhaft mehrere mögliche Bewegungsabläufe eines Parallelroboters mit umlaufenden Antrieben und zwei Antrieben, bei denen die Bewegungsbahn des Endeffektors 5 während einer Bewegungsperiode mehrfach die Begrenzung des Arbeitsraums berührt. Wie man erkennt, sind für ein und denselben Roboter und damit für ein und denselben Arbeitsraum verschiedenste Bewegungsabläufe (beinhaltend unterschiedliche Konfigurationswechsel) darstellbar, die für die umkehrende Bewegung die Konfigurationswechsel nutzen um bei überwiegend kontinuierlicher Antriebsrichtung Richtungswechsel am Arbeitorgan auszuführen und damit Energieaufwand zum Bremsen und Beschleunigen zu verringern.

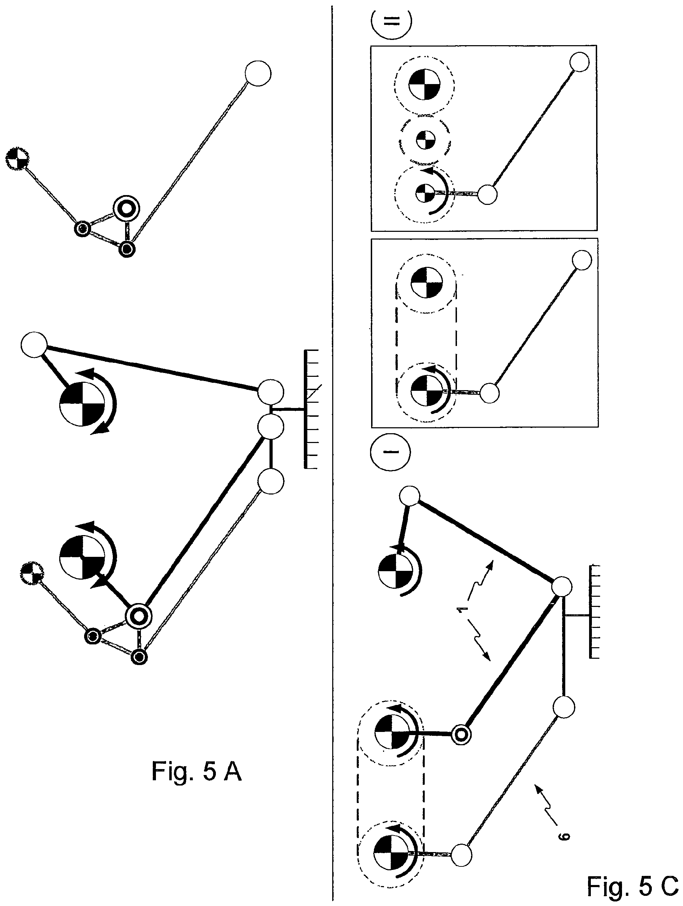

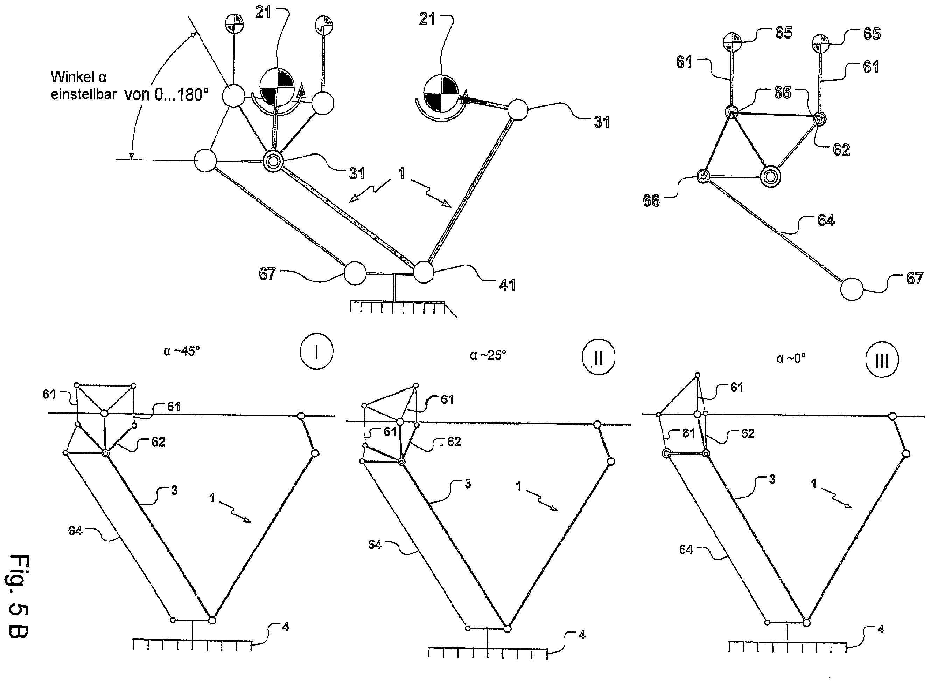

Fig. 5 zeigt diverse Gestaltungsmöglichkeiten für umlauffähige Grund- und Parallelstrukturen, wie hierin beschrieben und beansprucht.

Die obere Darstellung (Fig. 5A) zeigt wiederum einen bekannten Parallelroboter, bei dem eine Grundstruktur 1 eine zusätzliche Parallelstruktur 6 aufweist, um den Endeffektor 4 parallel zur Arbeitsfläche zu halten. Diese Parallelstruktur 6, die rechts noch einmal separat gezeigt ist, ist nicht umlauffähig, weil sie - ähnlich wie die Grundstruktur 1 in Fig. 3 links - mit anderen Teilen der Vorrichtung kollidieren würde. Umlauffähigkeit ist hier jedoch auch nicht nötig, weil bekannte Roboter dieses Typs mit schwingenden Antrieben arbeiten, wie oben bereits dargelegt.

Die mittlere Darstellung (Fig. 5B) zeigt hingegen einen neuartigen Parallelroboter, bei dem sowohl die beiden Grundstrukturen 1 als auch die der linken Grundstruktur 1 überlagerte Parallelstruktur 6, die rechts noch einmal separat gezeigt ist, umlauffähig gestaltet sind. Dazu weist die Parallelstruktur 6 zwei parallel zum Oberarm 2 der Grundstruktur 1 angeordnete, durch je ein gestellfestes erstes Gelenk 65 gehaltene Kurbelglieder 61 sowie ein Koppelglied 64 auf, die miteinander und mit dem Unterarmgelenk 31 der Grundstruktur 1 über einen Dreiecksarm (hier vier Gelenke) 63 gelenkig verbunden ist. Der Dreiecksarm 62 hält dabei die beiden Kurbelglieder 61 parallel zueinander und das Koppelglied 64 parallel zum Unterarm 3 der Grundstruktur 1 hält. Diese umlauffähige Gestaltung ist in der Darstellung I nochmals schematisch wiedergegeben.

Die Ausführung der Parallelstruktur kann in unterschiedlicher Ausgestaltung erfolgen. Im Unterschied zu bestehenden Systemen ist ein zweites Kurbelglied 61 notwendig. Dieses muss so angeordnet sein, dass die bewegten Teile umlauffähig sind und so, dass die Kombination aus Kurbelglied 61 und Dreiecksarm 63 jeweils immer eine geeignete Kraftübertragung in jeder Stellung möglich machen (d.h. keine gleichzeitigen Streck- oder Decklagen der Kurbelglieder 61 und mit dem Dreiecksarm 63). In Fig. 5B sind verschiedene Gestaltungsbeispiele dargestellt, die sich hinsichtlich ihrer Anordnung im Winkel alpha unterscheiden (gemeinsam ist allen Dreiecksarmen 63 die Gelenkanzahl 4).

Der zweite Dreiecksarm 63 wird benötigt, weil die beiden Kurbelglieder 61 gestellseitig auf gleicher Höhe angeordnet sind und das Koppelglied 64 außerhalb der von den beiden Grundstrukturen 1 gebildeten kinematischen Kette, also links von der linken Grundstruktur 1, angeordnet ist. Auf den zweiten Dreiecksarm 63 könnte verzichtet werden, wenn entweder das Koppelglied 64 zwischen den beiden Grundstrukturen 1 angeordnet wäre oder die beiden Kurbelglieder 61 gestellseitig in unterschiedlichen Höhen gelagert wären. Auch derartige Lösungen sind von der Erfindung mit umfasst.

Für letzteren Fall, bei dem die beiden Kurbelglieder 64 gestellseitig in unterschiedlichen Höhen gelagert sind, sind Gestaltungsvarianten in den Darstellungen II und III von Fig. 5B schematisch wiedergegeben, wobei der zweite Dreiecksarm 63 in Darstellung II noch vorhanden ist, in Darstellung III hingegen ganz entfällt.

Die untere Darstellung (Fig. 5C) zeigt eine weitere Gestaltungsalternative, bei der die Umlauffähigkeit der Parallelstruktur 6 dadurch erreicht wird, dass das Kurbelglied 61 der Parallelstruktur 6 räumlich weit genug vom Oberarm 2 der Grundstruktur 1 entfernt (oder räumlich gestaffelt) ist, dass sowohl das Kurbelglied 61 als auch der Oberarm 2 kollisionsfrei umlaufen können und das Kurbelglied 61 synchron zum Oberarm 2 antreibbar ist. Dies kann im einfachsten Fall dadurch erreicht werden, dass die Parallelstruktur 6 eine eigene Antriebseinrichtung 5 aufweist. Alternativ kann die Parallelstruktur 6 antriebsseitig durch eine Kraftübertragungseinrichtung mit der Grundstruktur 1 gekoppelt sein, so dass eine Antriebseinrichtung 5 die Grundstruktur 1 und die Parallelstruktur 6 gleichzeitig antreibt. Diese Kraftübertragungseinrichtung kann beispielsweise durch ein Riemen- oder Kettengetriebe, wie in Darstellung I von Fig. 5C dargestellt, oder durch ein Zahnrad- oder Reibradgetriebe, wie in Darstellung II von Fig. 5C dargestellt, realisiert sein.

Fig. 6 zeigt in einer Seitenansicht und einer perspektivischen Ansicht ein konkretes Ausführungsbeispiel für einen zweidimensional arbeitenden Parallelroboter mit zwei Grundstrukturen 1.

An gestellfesten Lagerböcken 51 sind zwei Oberarmgelenke 21 auf gleicher Höhe angeordnet, an denen Oberarme 2 befestigt sind, welche durch je eine Antriebseinrichtung 5 umlaufend antreibbar sind. Diese Oberarme 2 sind durch Unterarmgelenke 31 mit Unterarmen 3 verbunden. Beide Unterarme 3 sind durch je ein Handgelenk 41 mit einem Endeffektor 4 verbunden.

Der in der Darstellung rechts angeordneten Grundstruktur 1 ist eine Parallelstruktur 6 überlagert, die zwei Kurbelglieder 61 und ein Koppelglied 64 aufweist. Die Kurbelglieder 61 sind an ihrem einen Ende an je einem gestellfesten ersten Gelenk 65, das oberhalb des Oberarmgelenks 21 angeordnet ist, gelagert und an ihrem anderen Ende durch ein zweites Gelenk 66 mit einem Dreiecksarm 62 verbunden. An einem der beiden zweiten Gelenke 66 des Dreiecksarms 62 greift ein Koppelglied 64 an, das parallel zum Unterarm 3 der Grundstruktur 1 verläuft und an seinem anderen Ende durch ein drittes Gelenk 67 mit dem Endeffektor 4 verbunden ist.

Alle Elemente der beiden Grundstrukturen 1 und der Parallelstruktur 6 sind so gestaltet und relativ zueinander so angeordnet, dass ein umlaufender Antrieb der Oberarme 2 der Grundstrukturen 1 möglich ist, wodurch auch die Kurbelglieder 61 umlaufen. Die Kollisionsfreiheit wird dabei durch eine in der Tiefenrichtung gestaffelte Anordnung der Elemente erreicht.

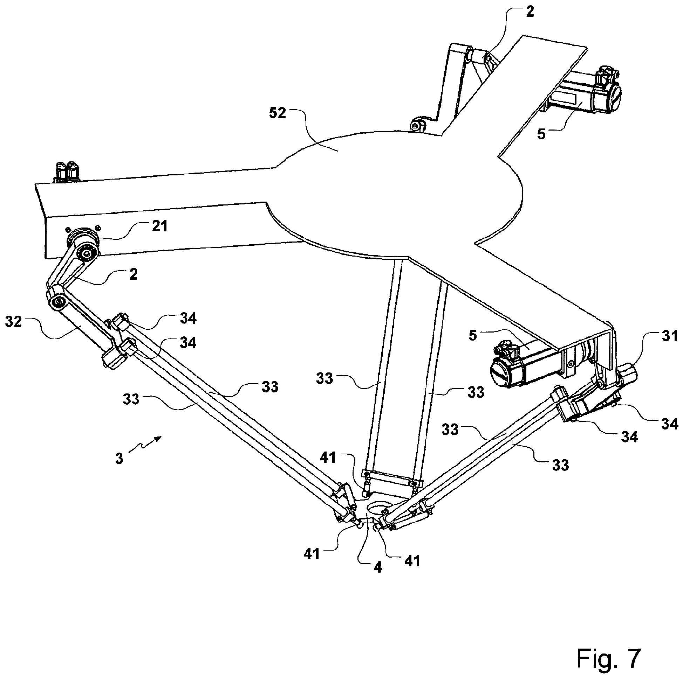

Fig. 7 zeigt ein konkretes Ausführungsbeispiel für einen dreidimensional arbeitenden umlaufenden/ umlauffähigen Parallelroboter.

An einem Grundträger 52 sind drei Grundstrukturen 1 beweglich befestigt. Dazu sind am Grundträger 52 drei Oberarmgelenke 21 auf gleicher Höhe (kann auch abweichen) angeordnet, an denen Oberarme 2 befestigt sind, welche durch je eine Antriebseinrichtung 5 umlaufend antreibbar sind. Die Anordnung ist erfindungsseitig nicht eingeschränkt und kann symmetrisch, unsymmetrisch als auch frei sein. Diese Oberarme 2 sind durch Unterarmgelenke 31 mit Unterarmen 3 verbunden. Beide Unterarme 3 sind durch je ein Handgelenk 41 mit einem Endeffektor 4 verbunden.

Die Unterarme 3 sind mehrteilig aufgebaut: An das Unterarmgelenk 31 schließt sich zunächst unmittelbar ein erstes oberes Unterarmelement 32 an. An diesem sind durch je ein Zwischengelenk 34 zwei parallel zueinander angeordnete, senkrecht zur Bewegungsebene des ersten Unterarmelements 32 verlaufende zweite untere Unterarmelemente 33 angeordnet. Diese zweiten Unterarmelemente 33 sind jeweils über ein Handgelenk 41 mit dem Endeffektor 4 verbunden. Diese doppelte Gelenkigkeit des Unterarms 3 - in einer ersten Ebene um das Unterarmgelenk 31 sowie senkrecht dazu in einer zweiten Ebene um die beiden Zwischengelenke 34 - ermöglicht im Zusammenspiel aller drei Grundstrukturen 1 die Bewegung des Endeffektors 4 in drei Raumdimensionen x,y,z. Der Aufbau mit dem Unterarmelement 32 und 33 stellt die Umlauffähigkeit sicher und alle Gelenke bilden in Ihrer Gesamtheit den gleichen Freiheitsgrad wie bei üblichen Ausführungen mit Kugel- oder Kardangelenken (ohne axiale Drehung). Eine separate Parallelstruktur wie bei dem Ausführungsbeispiel gemäß Fig. 6 wird nicht benötigt.

Alle Elemente der beiden Grundstrukturen 1 sind so gestaltet und relativ zueinander so angeordnet, dass ein umlaufender Antrieb der Oberarme 2 der Grundstrukturen 1 möglich ist. Die Kollisionsfreiheit wird dabei auch hier durch eine in der Tiefenrichtung gestaffelte Anordnung der Elemente erreicht.

### Bezugszeichenliste

- 1: Grundstruktur
- 2: Oberarm
- 21: Oberarmgelenk
- 22: Oberarmelement
- 3: Unterarm
- 31: Unterarmgelenk
- 32: erstes Unterarmelement
- 33: zweites Unterarmelement
- 34: Zwischengelenk
- 4: Endeffektor
- 41: Handgelenk
- 5: Antriebseinrichtung
- 51: Lagerbock
- 52: Grundträger
- 6: Parallelstruktur
- 61: Kurbelglied
- 62: Dreiecksarm
- 63: Dreiecksarm (vier Gelenke)
- 64: Koppelglied
- 65: erstes Gelenk
- 66: zweites Gelenk
- 67: drittes Gelenk

## Patentansprüche

1. Parallelroboter mit mindestens einer geschlossenen kinematischen Kette, umfassend mindestens zwei Grundstrukturen (1) aus mindestens je einem Oberarm (2) und je einem Unterarm (3), wobei die Oberarme (2) an einem ersten Ende mittels je eines Oberarmgelenks (21) gestellfest angeordnet sind, an einem zweiten Ende mittels je eines Unterarmgelenks (31) mit einem ersten Ende je eines Unterarms (3) verbunden sind und die Unterarme (3) an ihrem zweiten Ende mittels eines oder je eines Handgelenks (41) mit einem Endeffektor (4) verbunden sind, wobei jeder Oberarm (2) mit je einer Antriebseinrichtung (5) antreibbar verbunden ist, **dadurch gekennzeichnet, dass** das Oberarmgelenk (21) und das Unterarmgelenk (31) mindestens einer Grundstruktur (1) umlauffähig sind und die Antriebseinrichtung (5) der mindestens einen Grundstruktur (1) zum umlaufenden Antrieb des Oberarms (2) ausgebildet sind, wobei die Antriebseinrichtung (5) der mindestens einen Grundstruktur (1) mit einer Steuerungseinrichtung wirkverbunden ist, welche die Antriebseinrichtung (5) so ansteuert, dass der Endeffektor (4) eine periodische Bewegung zwischen mindestens zwei Arbeitspunkten innerhalb eines in einem durch die Oberarmgelenke begrenzten Halbraum liegenden Arbeitsraums dadurch ausführt, dass der Oberarm (2) mindestens einer Grundstruktur (1) fortwährend umlaufende Bewegungen ausführt, wobei die Bewegungsbahn des Endeffektors (4) während einer Bewegungsperiode mindestens einmal die Begrenzung des Arbeitsraums berührt und damit ein Konfigurationswechsel durchgeführt wird.

2. Parallelroboter nach Anspruch 1, **dadurch gekennzeichnet, dass** mindestens eine erste Grundstruktur (1) eine Parallelstruktur (6) aufweist, die an einem ersten Ende gestellfest angeordnet ist und an einem zweiten Ende mit dem Endeffektor (4) so verbunden ist, dass der Endeffektor (4) bei der periodischen Bewegung mit konstanter räumlicher Winkelausrichtung gehalten wird.

3. Parallelroboter nach Anspruch 2, **dadurch gekennzeichnet, dass** die Parallelstruktur (6) parallel zu der ersten Grundstruktur (1) angeordnet ist, wobei die Oberarmgelenke (21), Unterarmgelenke (31) und Handgelenke (41) der ersten Grundstruktur (1) und der Parallelstruktur (6) mit jeweils gleichem Abstand zueinander angeordnet sind.

4. Parallelroboter nach Anspruch 3, **dadurch gekennzeichnet, dass** die Parallelstruktur (6) durch eine eigene Antriebseinrichtung (5) synchron zur ersten Grundstruktur (1) antreibbar ist.

5. Parallelroboter nach Anspruch 3, **dadurch gekennzeichnet, dass** die Parallelstruktur (6) mittels einer Kraftübertragungseinrichtung durch die Antriebseinrichtung (5) der ersten Grundstruktur (1) synchron zur ersten Grundstruktur (1) antreibbar ist.

6. Parallelroboter nach Anspruch 2, **dadurch gekennzeichnet, dass** die Parallelstruktur (6)
• zwei mit einem festen ersten Abstand parallel zueinander angeordnete Kurbelglieder (61) umfasst,
a. deren jeweiliges erstes Ende umlauffähig gestellfest angebracht ist und
b. deren jeweiliges zweites Ende umlauffähig
i. mit einem Abstand voneinander, der gleich groß ist wie der erste Abstand,
c. mit dem Unterarmgelenk (31) der ersten Grundstruktur (1) verbunden ist, und
• ein parallel zum Unterarm (3) der ersten Grundstruktur (1) angeordnetes Koppelglied (64) umfasst,
a. dessen erstes Ende gelenkig
i. mit einem zweiten Abstand vom Unterarmgelenk (31) der ersten Grundstruktur (1)
b. mit dem Unterarmgelenk (31) der ersten Grundstruktur (1) verbunden ist, und
c. dessen zweites Ende gelenkig
i. mit einem Abstand zum Handgelenk (41), der gleich groß ist wie der zweite Abstand,
d. mit dem Endeffektor (4) verbunden ist.

7. Steuerungsverfahren für einen Parallelroboter nach einem der Ansprüche 1 bis 3, **dadurch gekennzeichnet, dass** der Oberarm (2) mindestens einer Grundstruktur (1) zu einer fortwährend umlaufenden Bewegung angetrieben wird, dass der
Endeffektor (4) eine periodische Bewegung zwischen mindestens zwei Arbeitspunkten innerhalb eines in einem durch die Oberarmgelenke begrenzten Halbraum liegenden Arbeitsraums ausführt, und dass der Oberarm (2) fortwährend umlaufende Bewegungen ausführt, wobei die Bewegungsbahn des
Endeffektors (4) während einer Bewegungsperiode mindestens einmal die Begrenzung des Arbeitsraums berührt und damit ein Konfigurationswechsel durchgeführt wird.

8. Steuerungsverfahren nach Anspruch 7, **dadurch gekennzeichnet, dass** die mindestens zwei Antriebseinrichtungen (5) der mindestens zwei Grundstrukturen (1) unabhängig voneinander durch eine programmierbare Steuerungseinrichtung angesteuert werden.

9. Steuerungsverfahren nach Anspruch 7, **dadurch gekennzeichnet, dass** die mindestens eine Grundstruktur (1) an mindestens einer Stelle der periodischen Bewegung des Endeffektors (4) so angesteuert wird, dass eine Streck- oder Decklage zwischen Oberarm (2) und Unterarm (3) erzeugt und dadurch über den Endeffektor auf die verbundene Einrichtung oder das in Kontakt stehende Produkt oder die in Kontakt stehende Einrichtung eine hohe Kraft ausgeübt wird.

10. • Steuerungsverfahren nach Anspruch 9, **dadurch gekennzeichnet, dass** die Funktion der Kraftaufbringung in Kombination mit einem Handhabungsvorgang von Produkten Anwendung finden kann.

## Claims

1. A parallel robot having at least one closed kinematic chain, comprising at least two base structures (1) consisting each of at least one upper arm (2) and at least one forearm (3), said upper arms (2) being each fixedly mounted at a first end to the robot base by means of an upper arm joint (21) and connected at a second end to a first end of a forearm (3) by means of a forearm joint (31), and said forearms (3) being connected at their second ends to an end effector (4) by means of a single wrist or by individual wrists (41), each upper arm (2) being driveable connected to a drive device (5), **characterised in that** the upper arm joint (21) and the forearm joint (31) of at least one base structure (1) are capable of rotating and the drive device (5) of the at least one base structure (1) is configured for driving the upper arm (2) in a rotating manner, said drive device (5) of the at least one base structure (1) being operatively connected to a control device which activates the drive device (5) in such a manner that the end effector (4) is made to execute a periodic movement between at least two operating points within a working area situated in a half-space delimited by the upper arm joints by having the upper arm (2) of at least one base structure (1) perform continually rotating movements, with the trajectory of the end effector (4) touching the delimitation of the working area at least once in the course of a motion period, thus causing a configuration change.

2. The parallel robot as claimed in claim 1, **characterised in that** at least a first base structure (1) has a parallel structure (6) which at a first end is fixedly mounted to the robot base and at a second end is connected to the end effector (4) in such a manner that said end effector (4) is maintained at a constant angular orientation in space as it performs its periodic movement.

3. The parallel robot as claimed in claim 2, **characterised in that** the parallel structure (6) is arranged in parallel with the first base structure (1), with each of the upper arm joints (21), the forearm joints (31), and the wrists (41) of the first base structure (1) and the parallel structure (6) being spaced apart from each other by equal distances.

4. The parallel robot as claimed in claim 3, **characterised in that** the parallel structure (6) may be driven in synchronism with the first base structure (1) by a drive device (5) of its own.

5. The parallel robot as claimed in claim 3, **characterised in that** the parallel structure (6) may be driven in synchronism with the first base structure (1) by the drive device (5) of the first base structure (1) using a power transmission device.

6. The parallel robot as claimed in claim 2, **characterised in that** the parallel structure
- comprises two crank links (61) arranged in parallel with respect to each other at a fixed, first distance,
a. the first ends of which are each fixedly mounted to the robot base in a manner capable of rotating, and
b. the second ends of which are each connected, in a manner capable of rotating,
i. and spaced apart from each other by a distance which is equal to the first distance,
c. to the forearm joint (31) of the first base structure (1), and
- comprises a coupling link (64) disposed in parallel with the forearm (3) of the first base structure (1),
a. the first end of which is hingedly connected,
i. and spaced apart by a second distance from the forearm joint (31) of the first base structure (1),
b. to said forearm joint (31) of the first base structure (1), and
c. the second end of which is hingedly connected,
i. and spaced apart from the wrist (41) by a distance which is equal to the second distance,
d. to the end effector (4).

7. A control method for a parallel robot as claimed in any one of claims 1 to 3, **characterised in that** the upper arm (2) of at least one base structure (1) is driven so as to perform a continuously rotating movement, **in that** the end effector (4) performs a periodic movement between at least two operating points within a working area situated in a half-space delimited by the upper arm joints, and **in that** the upper arm (2) performs continuously rotating movements, with the trajectory of the end effector (4) touching the delimitation of the working area at least once in the course of a motion period, thus causing a configuration change.

8. The control method as claimed in claim 7, **characterised in that** the at least two drive devices (5) of the at least two base structures (1) are activated independently from each other by a programmable control device.

9. The control method as claimed in claim 7, **characterised in that** the at least one base structure (1), at at least one point in the periodic movement of the end effector (4), is activated in such a manner that a stretching position or a covering position is created between the upper arm (2) and the forearm (3), thus causing a high force to be applied by the end effector on the connected equipment or the product in contact or the equipment in contact.

10. The control method as claimed in claim 9, **characterised in that** the function of applying force may be used in combination with a product handling process.

## Revendications

1. Robot parallèle avec au moins une chaîne cinématique fermée, comprenant au moins deux structures de base (1) constituées respectivement d'au moins un bras (2) et d'au moins un avant-bras (3), les bras (2) étant disposés, à une première extrémité, de manière solidaire au bâti au moyen respectivement d'une articulation de bras (21) et étant reliés, à une deuxième extrémité, à une première extrémité de respectivement un avant-bras (3) au moyen respectivement d'une articulation d'avant-bras (31), et les avant-bras (3) étant reliés, à leur deuxième extrémité, à un effecteur terminal (4) au moyen d'un seul poignet ou au moyen respectivement d'un poignet (41), chaque bras (2) étant relié respectivement à un dispositif d'entraînement (5) de manière à pouvoir être entraîné, **caractérisé en ce que** l'articulation de bras (21) et l'articulation d'avant-bras (31) d'au moins une structure de base (1) peuvent tourner et que le dispositif d'entraînement (5) de ladite au moins une structure de base (1) est conçu pour entraîner le bras (2) en rotation, le dispositif d'entraînement (5) de ladite au moins une structure de base (1) étant relié de manière opérationnelle à un dispositif de commande qui active le dispositif d'entraînement (5) de manière telle que l'effecteur terminal (4) exécute un mouvement périodique entre au moins deux points de travail à l'intérieur d'un espace de travail situé dans un demi-espace délimité par les articulations de bras **en ce que** le bras (2) d'au moins une structure de base (1) exécute des mouvements de rotation continue, la trajectoire décrite par l'effecteur terminal (4) en mouvement touchant, lors d'une période de mouvement, au moins une fois la délimitation de l'espace de travail, provoquant ainsi un changement de configuration.

2. Robot parallèle selon la revendication 1, **caractérisé en ce qu'**au moins une première structure de base (1) présente une structure parallèle (6) qui est disposée, à une première extrémité, de manière solidaire au bâti et qui est reliée, à une deuxième extrémité, à l'effecteur terminal (4) de manière telle que l'effecteur terminal (4) est maintenu, lors du mouvement périodique, avec une orientation angulaire spatiale constante.

3. Robot parallèle selon la revendication 2, **caractérisé en ce que** la structure parallèle (6) est disposée parallèlement à la première structure de base (1), les articulations de bras (21), les articulations d'avant-bras (31) et les poignets (41) de la première structure de base (1) et de la structure parallèle (6) étant respectivement disposés à équidistance les uns des autres.

4. Robot parallèle selon la revendication 3, **caractérisé en ce que** la structure parallèle (6) peut être entraînée par son propre dispositif d'entraînement (5) de manière synchrone à la première structure de base (1).

5. Robot parallèle selon la revendication 3, **caractérisé en ce que** la structure parallèle (6) peut être entraînée par le dispositif d'entraînement (5) de la première structure de base (1) de manière synchrone à la première structure de base (1), et ce au moyen d'un dispositif de transmission de force.

6. Robot parallèle selon la revendication 2, **caractérisé en ce que** la structure parallèle
- comprend deux éléments de manivelle (61) disposés parallèlement l'un à l'autre en respectant une première distance fixe,
a. et dont la première extrémité respective est fixée solidairement au bâti de manière à pouvoir tourner et
b. et dont la deuxième extrémité respective est reliée,
i. en respectant une distance entre elles qui est identique à la première distance,
c. à l'articulation d'avant-bras (31) de la première structure de base (1) de manière à pouvoir tourner, et
- comprend un élément de couplage (64) disposé parallèlement à l'avant-bras (3) de la première structure de base (1),
a. et dont la première extrémité est reliée de manière articulée,
i. en respectant une deuxième distance donnée par rapport à l'articulation d'avant-bras (31) de la première structure de base (1),
b. à l'articulation d'avant-bras (31) de la première structure de base (1), et
c. et dont la deuxième extrémité est reliée de manière articulée,
i. en respectant une distance donnée par rapport au poignet (41), laquelle est identique à la deuxième distance,
d. à l'effecteur terminal (4).

7. Procédé de commande pour un robot parallèle selon l'une quelconque des revendications 1 à 3, **caractérisé en ce que** le bras (2) d'au moins une structure de base (1) est entraîné de manière à décrire un mouvement de rotation continue, **en ce que** l'effecteur terminal (4) exécute un mouvement périodique entre au moins deux points de travail à l'intérieur d'un espace de travail qui est situé dans un demi-espace délimité par les articulations de bras, et **en ce que** le bras (2) exécute des mouvements de rotation continue, la trajectoire décrite par l'effecteur terminal (4) en mouvement touchant, lors d'une période de mouvement, au moins une fois la délimitation de l'espace de travail, provoquant ainsi un changement de configuration.

8. Procédé de commande selon la revendication 7, **caractérisé en ce que** lesdits au moins deux dispositifs d'entraînement (5) desdites au moins deux structures de base (1) sont activés de manière indépendante l'un de l'autre par un dispositif de commande programmable.

9. Procédé de commande selon la revendication 7, **caractérisé en ce que** ladite au moins une structure de base (1) est activée à au moins un point du mouvement périodique effectué par l'effecteur terminal (4) de manière telle que le bras (2) et l'avant-bras (3) se trouvent dans une position de recouvrement ou dans le prolongement l'un de l'autre et qu'une force élevée s'exerce ainsi, par l'intermédiaire de l'effecteur terminal, sur le dispositif relié ou sur le produit en contact ou sur le dispositif en contact.

10. Procédé de commande selon la revendication 9, **caractérisé en ce que** la fonction de l'application de force peut être utilisée en combinaison avec un processus de manutention de produits.
